Europäisches Patentamt

European Patent Office

Office européen des brevets

(19)

(11) Veröffentlichungsnummer : **0 405 243 B1**

(12) # EUROPÄISCHE PATENTSCHRIFT

(45) Veröffentlichungstag der Patentschrift :
**07.10.92 Patentblatt 92/41**

(51) Int. Cl.⁵ : **A01M 7/00**

(21) Anmeldenummer : **90111277.1**

(22) Anmeldetag : **15.06.90**

(54) Landwirtschaftliche Feldspritze.

(30) Priorität : **28.06.89 DE 3921087**

(43) Veröffentlichungstag der Anmeldung :
**02.01.91 Patentblatt 91/01**

(45) Bekanntmachung des Hinweises auf die
Patenterteilung :
**07.10.92 Patentblatt 92/41**

(84) Benannte Vertragsstaaten :
**DE DK FR GB NL**

(56) Entgegenhaltungen :
**CH-A- 669 885**
**DE-C- 3 630 800**

(56) Entgegenhaltungen :
**LANDBOUW MECHANISATIE. vol. 40, no. 12,
Dezember 1989, WAGENINGEN NL Seiten 16 -
19; "DE NIEUWE DOUVEN VELDSPUITEN"
LANDTECHNIK. vol. 43, no. 1, Januar 1988,
HANNOVER DE Seiten 46 - 48; H.OSTARHILD:
"PLANZENSCHUTZTECHNIK: SEHR BREITE-
SANGEBOT MIT ZAHLREICHEN DETAILVER-
BESSERUNGEN"
Prospekt der Firma DOUVEN: "Fortschrittliche
Spritztechnik ist kostensparend und umweltschonend"**

(73) Patentinhaber : **Amazonen-Werke H. Dreyer
GmbH & Co. KG
Am Amazonenwerk 9-13
W-4507 Hasbergen-Gaste (DE)**

(72) Erfinder : **Oberheide, Friedich
Kiefernweg 15
W-4507 Hasbergen (DE)**

EP 0 405 243 B1

## Beschreibung

Die Erfindung betrifft eine landwirtschaftliche Feldspritze gemäß des Oberbegriffes des Patentanspruches 1.

Eine derartige Feldspritze ist beispielsweise durch die DE-C-36 30 800 bekannt. Bei dieser bekannten Feldspritze wird der Flüssigkeitstank durch einen zwischen dem Deckel und dem Sieb, welches unterhalb der Einfüllöffnung angeordnet ist, angeordneten Befüllanschluß befüllt. Bei dieser Anordnung des Befüllanschlusses besteht die Gefahr, wenn der Wasserdruck in der Befülleitung abfällt und in der Befülleitung dann ein Unterdruck entsteht, so daß durch den Befüllanschluß Flüssigkeit abgesaugt werden kann, daß die sich im Flüssigkeitstank befindliche Flüssigkeitsmenge in das öffentliche Wassernetz oder zumindest einen Teil davon gelangen kann, wenn der Flüssigkeitstank bis unter den Deckel gefüllt ist.

Der Erfindung liegt die Aufgabe zugrunde, in einfacher Weise eine einfache Befüllvorrichtung für die Feldspritze zu schaffen, wobei auf einfache und kostengünstige Weise sichergestellt ist, daß beim evtl. Rücksaugen keine Flüssigkeit aus dem Flüssigkeitstank in das öffentliche Wassernetz gelangen kann.

Diese Aufgabe wird erfindungsgemäß durch die Maßnahmen gemäß des Kennzeichen des Patentanspruches 1 gelöst.

Hierdurch ist in jedem Falle sichergestellt, daß keine Flüssigkeit, die sich im Flüssigkeitstank befindet bei einem Druckabfall in der Befülleitung, die in einen Unterdruck umschlägt, Flüssigkeit, die bereits mit Spritzmittel versetzt ist, aus dem Flüssigkeitstank abgesaugt werden kann, weil der Flüssigkeitsbehälter mit dem kleineren Volumen immer ein entsprechende Polster (Luft oder zunächst reines Wasser) bildet. Um den Flüssigkeitstank sehr schnell befüllen zu können, ist in dem Flüssigkeitsbehälter in dem oberen Bereich ein Belüftungsventil angeordnet. Dieses stellt weiterhin sicher, daß bei einem Druckabfall in der Befülleitung, der in einen Unterdruck umschlägt, keine Flüssigkeit aus dem Flüssigkeitstank angesaugt wird, sondern über das Belüftungsventil Luft in den Flüssigkeitsbehälter einströmt.

Damit in dem Flüssigkeitsbehälter Frischwasser mitgeführt werden kann, ist erfindungsgemäß vorgesehen, daß in der Flüssigkeitsleitung zwischen Flüssigkeitsbehälter und Flüssigkeitstank ein Absperrhahn angeordnet ist.

Um in einfacher Weise zusätzlich zu vermeiden, daß beim Einfüllen der Flüssigkeiten in den Flüssigkeitstank sich Schaum auf der Flüssigkeit bildet, ist erfindungsgemäß vorgesehen, daß die vom Flüssigkeitsbehälter zum Flüssigkeitstank führende Leitung in die Saugleitung mündet, daß in der Saugleitung ein Absperrhahn, vorzugsweise ein Dreiwegehahn angeordnet ist, und daß die vom Spülwasserbehälter kommende Leitung zwischen dem Flüssigkeitstank und dem Absperrhahn in die Saugleitung mündet.

Um aus dem Flüssigkeitsbehälter reines Wasser entnehmen zu können, ist erfindungsgemäß vorgesehen, daß an dem Flüssigkeitsbehälter mindestens ein weiterer Anschluß zur Wasserentnahme angeordnet ist. In einfacher Weise ist der Flüssigkeitsbehälter als Spülwasserbehälter ausgebildet.

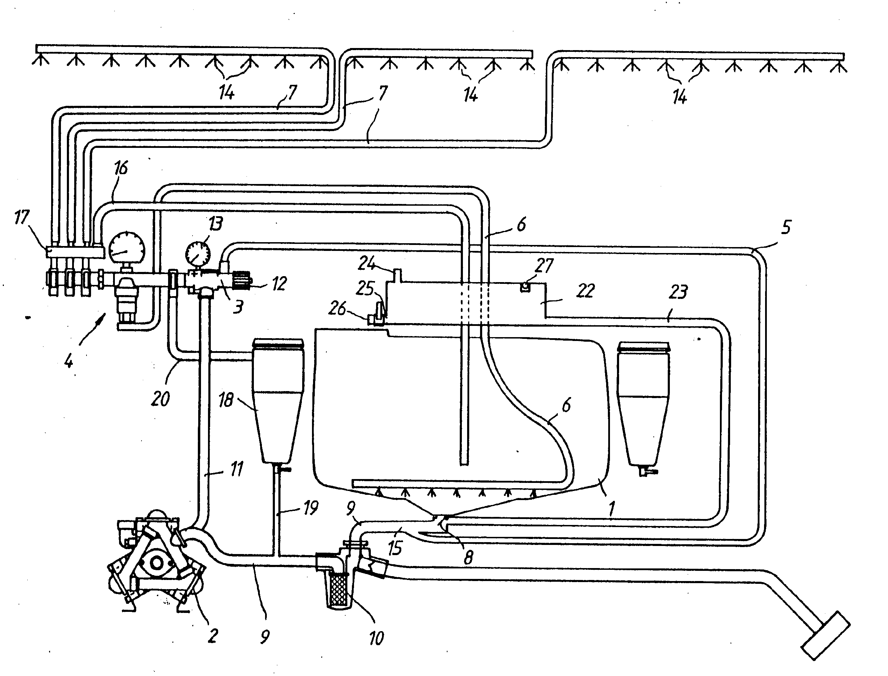

Weitere Einzelheiten der Erfindung sind den übrigen Unteransprüchen, der Beispielsbeschreibung und der Zeichnung zu entnehmen. Hierbei zeigt die Zeichnung den Anschluß der verschiedenen Leitungen bei einer erfindungsgemäßen Feldspritze in schematischer Darstellung.

Die landwirtschaftliche Feldspritze weist einen Flüssigkeitstank 1, eine Pumpe 2, ein Druckregelventil 3, eine Dosierarmatur 4, die Rücklaufleitung 5, die Rührleitung 6 sowie die Spritzleitungen 7 auf. An dem Boden des Flüssigkeitstanks 1 ist über den Dreiwegehahn 8 die Saugleitung 9 mit dem Filter 10 angeschlossen. Die Saugleitung 9 führt zu der Pumpe 2. Von der Pumpe 2 führt die Druckleitung 11 zu dem Druckregelventil 3 und der Dosierarmatur 4. Die Pumpe 2 wird in bekannter und daher nicht dargestellter Weise von der Zapfwelle eines Schleppers angetrieben. Die Pumpe 2 saugt über die Saugleitung 9 und den Filter 10 die Spritzflüssigkeit aus dem Flüssigkeitstank 1 an und drückt diese Flüssigkeit über die weiterführende Druckleitung 10 zu dem Druckregelventil 3. Entsprechend den über die Reglerschraube 12 eingestellten Spritzdruck, der an dem Manometer 13 abzulesen ist, wird die gewünschte Flüssigkeitsmenge in bekannter Weise über die Dosierarmatur 4, die für drei Teilbreiten vorgesehen ist, über die an die Dosierarmatur 4 angeschlossene Leitungen 7 den Spritzdüsen 14 zugeführt. Die zuviel von der Pumpe 2 über die Druckleitung 11 zu dem Druckregelventil 3 geförderte Flüssigkeitsmenge wird über die an dem Druckregelventil 3 angeschlossene Rückführleitung 5 dem Flüssigkeitsvorrat wieder zugeführt. Die Rückführleitung 5 mündet an der Stelle 15 in der vom Flüssigkeitstank zur Pumpe 2 führenden Saugleitung 9. Die Stelle 15, an der die Rückführleitung 5 in die Saugleitung 9 mündet, befindet sich bezogen auf die Druck- und Durchflußrichtung vor dem Filter 10, so daß die Rückführleitung 5 bezogen auf die Saug und Durchflußrichtung vor dem Filter 9 in die Saugleitung 9 einmündet. Des weiteren führt die Rücklaufleitung 16 von der Gleichdruckarmatur 17 der Dosierarmatur 4 in den Flüssigkeitstank 1 zurück. Des weiteren ist die Feldspritze mit einem Einspülbehälter 18 ausgestattet. Am unteren Ende des Einspülbehälters 18 ist die Einspülleitung 19 angeschlossen, welche in die Saugleitung 9 einmündet. Zwischen der Dosierarmatur 4 und dem oberen Bereich des Einspülbehälters 18 ist die Rücklaufleitung 20 angeordnet.

Über diese Leitung 20 und die Leitung 19 kann das sich im Einspülbehälter 18 befindliche Spritzmittel in die Flüssigkeit eingespült werden.

Oberhalb des Flüssigkeitstanks 1 ist ein weiterer Flüssigkeitsbehälter 22 angeordnet, der als Einspülbehälter ausgebildet ist. Der Einspülbehälter 22 weist ein wesentlich kleineres Volumen als der Flüssigkeitstank 1 auf. Zwischen dem unteren Bereich des Spülbehälters 22 und dem Dreiwegehahn 8 ist die Flüssigkeitsleitung 23, die als Befülleitung ausgebildet ist, angeordnet. Im oberen Bereich des Einspülbehälters 22 ist der Wasseranschluß 24 angeordnet, über welchen Wasser in den Spülwasserbehälter 22 einzufüllen ist. Über den Wasseranschluß 24 kann der Spülwasserbehälter 22 und der Flüssigkeitsbehälter 1 über die Befülleitung 23 befüllt werden. Der Dreiwegehahn 8 ist als Absperrhahn in der Flüssigkeitsleitung 23 zwischen dem Spülwasserbehälter 22 und dem Flüssigkeitstank 1 angeordnet. Die Leitung 23 mündet über den Dreiwegehahn 8 in der Saugleitung 9 ein, so daß in der entsprechenden Stellung des Absperrhahnes 8 der Flüssigkeitstank 8 von unten befüllt wird. Hierdurch wird eine Schaumbildung weitestgehend auf der Flüssigkeit im Flüssigkeitstank 1 beim Befüllen des Flüssigkeitstanks 1 vermieden.

Der Spülwasserbehälter 22 weist einen weiteren Anschluß 25 mit einem Absperrhahn 26 zur Wasserentnahme auf. Des weiteren ist im oberen Bereich des Spülwasserbehälters 22 das Belüftungsventil 27 angeordnet. Dieses Belüftungsventil 27 hat zwei Funktionen. Zunächst wird durch das Belüftungsventil 27 sichergestellt, falls an dem Befüllanschluß 24 ein Unterdruck auftreten sollte, das keine Flüssigkeit über die Leitung 23 aus dem Flüssigkeitstank 1 abgesaugt werden kann, weil über das Lüfungsventil 27 Luft in den Spülwasserbehälter 22 einströmen kann. Des weiteren stellt das Belüftungsventil 27 sicher, wenn ein Überdruck an dem Wasseranschluß 24 anliegt, daß das in dem Flüssigkeitsbehälter 1 einzufüllende Wasser mit einem entsprechenden Druck in den Flüssigkeitstank 1 eingefüllt wird, so daß die Befüllzeit des Flüssigkeitstanks 1 mit neuem Wasser sehr kurz ist.

## Patentansprüche

1. Landwirtschafliche Feldspritze mit einem Flüssigkeitstank, einer Flüssigkeitspumpe, deren Saugleitung im unterem Bereich des Flüssigkeitstank mündet, wobei die Feldspritze zusätzlich zu dem Flüssigkeitstank (1) einen weiteren Flüssigkeitsbehälter (22) mit kleinerem Volumen als den Flüssigkeitstank (1) aufweist, und wobei zwischen dem Flüssigkeitsbehälter (22) und dem Flüssigkeitstank (1) eine Flüssigkeitsleitung (23) angeschlossen ist, dadurch gekennzeichnet, daß im oberen Bereich des Flüssigkeitsbehälters (22) ein Wasseranschluß (24) zum Befüllen des Flüssigkeitsbehälters (22) und Flüssigkeitstanks (1) angeordnet ist, und daß in dem Flüssigkeitsbehälter (22) im oberen Bereich ein Belüftungsventil (27) angeordnet ist.

2. Feldspritze nach Anspruch 1, daudrch gekennzeichnet, daß in der Flüssigkeitsleitung (23) zwischen Flüssigkeitsbehälter (1) und Flüssigkeitstank (1) ein Absperrhahn (8) angeordnet ist.

3. Feldspritze nach Anspruch 1, dadurch gekennzeichnet, daß die vom Flüssigkeitsbehälter (22) zum Flüssigkeitstank (1) führende Leitung (23) in die Saugleitung (9) mündet, daß in der Saugleitung (9) ein Absperrhahn (8), vorzugsweise ein Dreiwegehahn angeordnet ist, und daß die vom Flüssigkeitsbehälter (22) kommende Leitung (23) zwischen dem Flüssigkeitstank (1) und dem Absperrhahn (8) in die Saugleitung (9) mündet.

4. Feldspritze nach einem oder mehreren der vorstehenden Ansprüche, dadurch gekennzeichnet, daß an dem Flüssigkeitsbehälter (22) mindestens ein weiterer Anschluß (25) zur Wasserentnahme angeordnet ist.

5. Feldspritze nach einem oder mehreren der vorstehenden Ansprüche, dadurch gekennzeichnet, daß der Flüssigkeitsbehälter (22) als Spülwasserbehälter ausgebildet ist.

6. Feldspritze nach einem oder mehreren der vorstehenden Ansprüche, dadurch gekennzeichnet, daß die Feldspritze ein Dosierarmatur (4) aufweist, von der eine Rücklaufleitung (20) abzweigt, welche in einem an der Feldspritze angeordneten Einspülbehälter (18) mündet.

7. Feldspritze nach einem oder mehreren der vorstehenden Ansprüche, dadurch gekennzeichnet, daß die Feldspritze eine Rücklaufleitung (5) aufweist, welche in die Saugleitung (9) einmündet.

## EP 0 405 243 B1

**Claims**

1. Agricultural field sprayer, including a liquid tank, a liquid pump, the suction pipe of which terminates in the lower region of the liquid tank, wherein the field sprayer includes, in addition to the liquid tank (1), an additional liquid container (22) having a smaller volume than the liquid tank (1), and wherein a liquid pipe (23) is connected between the liquid container (22) and the liquid tank (1), characterised in that a water connection (24) is disposed in the upper region of the liquid container (22) for the filling of the liquid container (22) and liquid tank (1), and in that an air inlet valve (27) is disposed in the upper region of the liquid container (22).

2. Field sprayer according to claim 1, characterised in that a shut-off valve (8) is disposed in the liquid pipe (23) between the liquid container (22) and the liquid tank (1).

3. Field sprayer according to claim 1, characterised in that the pipe (23), which extends from the liquid container (22) to the liquid tank (1), terminates in the suction pipe (9), in that a shut-off valve (8), preferably a three-way valve, is disposed in the suction pipe (9), and in that the pipe (23), which issues from the liquid container (22), extends between the liquid tank (1) and the shut-off valve (8) and terminates in the suction pipe (9).

4. Field sprayer according to one or more of the preceding claims, characterised in that at least one additional connection (25) for the removal of water is disposed on the liquid container (22).

5. Field sprayer according to one or more of the preceding claims, characterised in that the liquid container (22) is a container for dispensing water.

6. Field sprayer according to one or more of the preceding claims, characterised in that the field sprayer includes a metering fitting (4), from which a return pipe (20) branches, which return pipe terminates in a dispenser (18) disposed on the field sprayer.

7. Field sprayer according to one or more of the preceding claims, characterised in that the field sprayer includes a return pipe (5), which terminates in the suction pipe (9).


**Revendications**

1°) Pulvérisateur agricole de plein champ comportant un conteneur à liquide, une pompe à liquide dont la conduite d'aspiration débouche dans la zone inférieure du conteneur à liquide et ce pulvérisateur comporte en plus de ce conteneur (1), un autre réservoir à liquide (22) de plus petit volume que le conteneur (1), une conduite (23) étant branchée entre le réservoir (22) et le conteneur à liquide (1), pulvérisateur caractérisé en ce que dans la partie supérieure du réservoir à liquide (22) se trouve un branchement d'eau (24) pouvant remplir le réservoir de liquide (22) et le conteneur de liquide (1) et en ce qu'une soupape d'aération (27) est prévue dans la zone supérieure du réservoir à liquide (22).

2°) Pulvérisateur agricole selon la revendication 1, caractérisé par un robinet d'arrêt (8) prévu dans la conduite de liquide (23) entre le conteneur de liquide (1) et le réservoir de liquide (22).

3°) Pulvérisateur agricole selon la revendication 1, caractérisé en ce que la conduite (23) reliant le réservoir (22) au conteneur de liquide (1) débouche dans la conduite d'aspiration (9) et cette conduite (9) comporte un robinet d'arrêt (8) qui est de préférence un robinet à trois voies, et la conduite (23) venant du réservoir à liquide (22) débouche dans la conduite d'aspiration (9) entre le conteneur de liquide (1) et le robinet d'arrêt (8).

4°) Pulvérisateur agricole selon l'une ou plusieurs des revendications précédentes, caractérisé par au moins un autre branchement (25) de prise d'eau sur le réservoir à liquide (22).

5°) Pulvérisateur agricole selon l'une ou plusieurs des revendications précédentes, caractérisé en ce que le réservoir d'eau (22) est un réservoir d'eau de rinçage.

6°) Pulvérisateur agricole selon l'une ou plusieurs des revendications précédentes, caractérisé en ce que le pulvérisateur comporte un robinet de dosage (4) dont dérive une conduite de retour (20) débouchant dans le réservoir de rinçage (18) équipant le pulvérisateur.

7°) Pulvérisateur agricole selon l'une ou plusieurs des revendications précédentes, caractérisé en ce qu'il comporte une conduite de retour (5) qui débouche dans la conduite d'aspiration (9).

4

EP 0 405 243 B1